# EUROPÄISCHE PATENTSCHRIFT

(11) **EP 3 649 461 B1**
(45) Veröffentlichungstag und Bekanntmachung des Hinweises auf die Patenterteilung: **19.08.2026**
(21) Anmeldenummer: 18737867.4
(22) Anmeldetag: 03.07.2018
(51) Int. Cl.: G01N 21/94, F24S 40/20, F24S 40/90, H02S 50/15, H02S 40/10, G01M 11/00, G01N 21/93, F24S 23/70

(54) **VERFAHREN ZUR BESTIMMUNG DES VERSCHMUTZUNGSGRADES EINER REFLEKTIERENDEN FLÄCHE EINES SOLARKRAFTWERKS**
METHOD FOR DETERMINING THE DEGREE OF SOILING OF A REFLECTIVE SURFACE OF A SOLAR POWER PLANT
PROCÉDÉ DE DÉTERMINATION DU NIVEAU D'ENCRASSEMENT D'UNE SURFACE RÉFLÉCHISSANTE D'UNE CENTRALE SOLAIRE

(30) Priorität: 05.07.2017 DE 102017211466
(43) Veröffentlichungstag der Anmeldung: 13.05.2020
(73) Patentinhaber: Deutsches Zentrum für Luft- und Raumfahrt e.V., 51147 Köln (DE)
(72) Erfinder: RÖGER, Marc, 74182 Obersulm (DE); WOLFERTSTETTER, Fabian, 04007 Almeria (ES); PRAHL, Christoph, 04007 Almeria (ES); WILBERT, Stefan, 04003 Almeria (ES)
(74) Vertreter: dompatent
(86) Internationale Anmeldenummer: PCT/EP2018/067876
(87) Internationale Veröffentlichungsnummer: WO 2019/007926

(56) Entgegenhaltungen:
- KR-B1- 101 682 398
- JOSE I ZAPATA ET AL: "Estimation of average mirror reflectivity using digital photographs and specular reflectometer measurements", 2015 ASIA-PACIFIC SOLAR RESEARCH CONFERENCE, 1 December 2015 (2015-12-01), United States, pages 025112, XP055517899, Retrieved from the Internet <URL:https://www.researchgate.net/profile/Jose_Zapata14/publication/286920569_Estimation_of_average_mirror_reflectivity_using_digital_photographs_and_specular_reflectometer_measurements/links/56c3f63208ae60234250be96.pdf> [retrieved on 20181022], DOI: 10.1063/1.4790717
- ARQUEROS F ET AL: "A novel procedure for the optical characterization of solar concentrators", SOLAR ENERGY, PERGAMON PRESS. OXFORD, GB, vol. 75, no. 2, 1 August 2003 (2003-08-01), pages 135 - 142, XP004465032, ISSN: 0038-092X, DOI: 10.1016/J.SOLENER.2003.07.008
- BYRON BURGESS-GALLOP: "Preliminary Investigation of Remote Sensing for Concentrating Solar Thermal Plants", SCHOOL OF MECHANICAL AND MINING ENGINEERING. BACHELOR OF ENGINEERING THESIS, 28 October 2016 (2016-10-28), Australia, pages 1 - 34, XP055518281, Retrieved from the Internet <URL:https://espace.library.uq.edu.au/view/UQ:414770/BURGESS_GALLOP_Byron_thesis.pdf> [retrieved on 20181023], DOI: 10.14264/uql.2017.207
- Z GUAN ET AL: "DUST CHARACTERISATION FOR SOLAR COLLECTOR DEPOSITION AND CLEANING IN A CONCENTRATING SOLAR THERMAL POWER PLANT", PROCEEDINGS OF INTERNATIONAL CONFERENCE ON HEAT EXCHANGER FOULING AND CLEANING, 7 June 2015 (2015-06-07), Ireland, XP055518260, Retrieved from the Internet <URL:http://www.heatexchanger-fouling.com/papers/papers2015/40_Guan_F.pdf> [retrieved on 20181023]

## Beschreibung

Die vorliegende Erfindung betrifft ein Verfahren zur Bestimmung des Verschmutzungsgrades einer reflektierenden Fläche eines Solarkraftwerks.

Solarkraftwerke können grundsätzlich in solarthermische Kraftwerke, die die Solarenergie in Wärme umwandeln und Photovoltaikanlagen, die die Solarstrahlung direkt in Strom umwandeln, unterschieden werden. Beide Arten von Solarkraftwerken haben gemein, dass die Sonne auf große aufgestellte Flächen trifft und entweder direkt absorbiert wird (Photovoltaikanlagen) oder reflektiert wird (solarthermische Kraftwerke und spezielle Photovoltaikanlagen).

Derartige große Fläche, die zumeist im freien Feld aufgestellt sind, neigen zu Verschmutzungen.

Bei Spiegelflächen von Solarkraftwerken führt die Verschmutzung insbesondere zu ungewollter Streuung von auf die Verschmutzung treffender Strahlung, die somit nicht im gewünschten Maße von der Spiegelfläche reflektiert werden kann. Photovoltaikmodule weisen eine transparente Schicht, zumeist ein transparentes Substrat als Abdeckung der Photovoltaikzellen auf. Durch Verschmutzung dieses Substrats wird die Transmission von Solarstrahlung durch das Substrat und somit der Stromertrag vermindert.

Daher werden die Flächen der Solarkraftwerke in regelmäßigen Abständen gereinigt. Die Reinigung dieser Flächen, die mehrere Tausend Quadratmeter groß sein können, ist jedoch mit einem großen Aufwand verbunden. Um den optimalen Zeitpunkt für Reinigungsvorgänge zu bestimmen, wird versucht, die Verschmutzung messtechnisch zu bestimmen.

Zurzeit werden Verschmutzungsmessungen an Solarkraftwerken mittels eines Handgeräts zur Reflektivitätsmessung durchgeführt. Das Handgerät misst unter einem festen Winkel die Reflektion eines künstlich erzeugten Lichtstrahls mit einer typischerweise "roten" Wellenlänge. Die Messung mit diesem Gerät erfolgt auf einem Fleck von weniger als 1 cm Durchmesser auf dem Spiegel und ist nicht automatisierbar. Zur Erstellung einer Messreihe muss somit eine Vielzahl von Messungen von Hand und vor Ort durchgeführt werden, was langwierig und kostenträchtig ist, da üblicher Weise mit dem Handgerät für 5 Messpunkte auf einer Spiegelprobe ca. 15 Minuten benötigt werden. In einem Kraftwerk ist diese Arbeitszeit ein kritischer Kostenfaktor.

Aus DE 10 2012 215 153 B3 der Anmelderin ist ein System bekannt, bei dem der Verschmutzungsgrad von Solarspiegeln über einen längeren Zeitraum aufgenommen wird, um die Verschmutzungsbelastung eines Standortes beurteilen zu können. Hierbei wird die von einer Spiegelprobe reflektierte Direktstrahlung gemessen und der Messwert mit einem Messwert der Direktstrahlung der Sonne verglichen. Daraus lässt sich der Verschmutzungswert der Spiegelprobe bestimmen.

Nachteilig bei den vorbekannten Systemen ist, dass stets nur sehr kleine Bereiche der Flächen zur Bestimmung des Verschmutzungsgrades herangezogen werden und daher eine Übertragung der erhaltenen Werte auf gesamte Anlagen nur eingeschränkt möglich ist.

Die Vermessung per Hand hat darüber hinaus den Nachteil, dass häufig der Verschmutzungsgrad nur an unteren Bereichen von einzelnen Flächenabschnitten gemessen wird, da beispielsweise bei Heliostaten obere Bereiche nicht ohne Gerüst erreichbar sind.

Die Verschmutzung der Flächen der Solarkraftwerke wird hauptsächlich durch Staub verursacht. Aufgrund unterschiedlicher Windverhältnisse in einigen Bereichen des Solarkraftwerks können daher unterschiedliche Verschmutzungsgrade an Teilflächen entstehen.

Es bestehen insbesondere große Unterschiede zwischen der Mitte eines Solarfeldes und der Ränder. Eine quantitative Aussage über den örtlichen Verschmutzungsgrad durch Interpolation/Extrapolation zwischen den einzelnen Messpunkten ist zeitlich sehr aufwendig und häufig mit großen Fehlern belastet.

Der Verschmutzungsgrad wird bei reflektierenden Flächen von Solarkraftwerken als Quotient aus dem gerichteten Reflexionsgrad einer verschmutzten Fläche zu einer sauberen Fläche bestimmt. Im Falle von Photovoltaikkraftwerken, bei denen die Solarstrahlung durch ein Substrat transmittiert, ist der Verschmutzungsgrad üblicher Weise das Verhältnis von der elektrischen Ausgangsleistung eines verschmutzten Moduls zu einem gereinigten Modul und entspricht somit im Wesentlichen dem Verhältnis der Transmissionsgrade des verschmutzten und gereinigten Substrats.

Um die Reinigung der Solarfelder zu optimieren, wäre daher eine schnelle, großflächige, ortaufgelöste und qualitative Messmethode von Vorteil, wobei die Messung möglichst automatisiert erfolgen sollte.

X Jose I Zapata et al., "Estimation of average mirror reflectivity using digital photographs and specular reflectometer measurements", 2015 Asia-Pacific Solar Research Conference, United States, und Byron Burgess-Gallop, "Preliminary Investigation of Remote Sensing for Concentrating Solar Thermal Plants", School of Mechanical and Mining Engineering. Bachelor of Engineering Thesis, 2016, University of Queensland,

Australia, offenbaren ein Verfahren zur Bestimmung des Verschmutzungsgrades einer reflektierenden Fläche, wobei ein Abbild einer dunklen Fläche auf der reflektierenden Fläche aufgenommen und aus dem aufgenommenen Bild auf den Verschmutzungsgrad geschlossen wird.

Es ist daher die Aufgabe der vorliegenden Erfindung ein derartiges Verfahren zur Verfügung zu stellen. Die Erfindung ist definiert durch die Merkmale des Anspruchs 1.

Bei dem erfindungsgemäßen Verfahren zur Bestimmung des Verschmutzungsgrades einer reflektierenden Fläche, vorzugsweise Spiegelfläche, eines Solarkraftwerks, sind folgende Schritte vorgesehen:
a) Auswählen oder Bereitstellen einer definierten dunklen Fläche,
   Positionieren einer Kamera oder Verstellen der reflektierenden Fläche derart, dass ein Abbild der dunklen Fläche aus Sicht der Kamera auf der reflektierenden Fläche erscheint, und
   Beleuchten der reflektierenden Fläche mit Licht, wobei eine bekannte oder vorgegebene Beleuchtungssituation erzeugt wird,
b) Aufnahme eines oder mehrerer Bilder der Spiegelfläche mit der Kamera
c) Bestimmen von Bereichen des Bildes oder der Bilder, die die Reflektion der dunklen Fläche in der reflektierenden Fläche zeigen
d) Bestimmen mindestens eines Grauwertes eines Pixel des Bildes oder eines der Bilder in dem in Schritt c) bestimmten Bereichen
e) Bestimmen des Verschmutzungsgrads der reflektierenden Fläche aus dem mindestens einen Grauwert,
wobei vor Schritt a) ein Kalibrierungsschritt erfolgt, in dem Grauwerte der Kamera mit Referenzmessungen des Verschmutzungsgrades abgeglichen werden.

Der Erfindung liegt die Kenntnis zugrunde, dass die Kamera an einem Punkt der reflektierenden Fläche das reflektierte Bild der dunklen Fläche erkennt. Die in der Kamera detektierte Lichtstärke ist proportional zum Produkt aus dem Reflexionsgrad und der von dem Flächenelement auf den Punkt auf der reflektierenden Fläche treffenden Strahlungsfluss. Der Reflexionsgrad ist die über die Wellenlängen gemittelte Reflektivität und enthält Reflektionen an allen Grenzflächen sowie eventuelle Mehrfachreflektionen.

Durch die Verschmutzung der entsprechenden Fläche wird Strahlung, die von der dunklen Fläche kommt vorwärts und rückwärts gestreut. Die Kamera nimmt in Abhängigkeit von dem Beleuchtungswinkel und dem Beobachtungswinkel einen Anteil der rückwärts gestreuten Strahlung wahr.

Der in das Kameraobjektiv fallende Strahlungsfluss kann über die bidirektionale Reflektanzverteilungsfunktion (BRDF) beschrieben werden. Diese beschreibt den Reflexionsgrad der verschmutzten Oberfläche als Funktion des Einfallwinkels der Strahlung, des Beobachtungswinkels und der Wellenlänge an dem Punkt der reflektierenden Fläche.

Ferner nimmt die Kamera Strahlung, die durch den Schmutz transmittiert, reflektiert und erneut transmittiert wird, auf. Dieser Strahlungsanteil ist, wie zuvor beschrieben, abhängig von dem Reflexionsgrad und dem von dem Flächenelement auf dem betrachteten Punkt auf die reflektierende Fläche treffenden Strahlungsfluss. Die Verschmutzung der reflektierenden Fläche wird durch den Quotienten aus Reflektivität des verschmutzten relativ zum sauberen Spiegel charakterisiert. Dieser Quotient stellt somit die relative Reflektivität dar.

Der Grauwert eines Pixels eines mit der Kamera aufgenommenen Bildes ist somit von der relativen Reflektivität des Spiegels abhängig.

Somit kann über den Grauwert auf die relative Reflektivität geschlossen werden.

Durch die Verwendung einer definierten dunklen Fläche, die von der reflektierenden Fläche reflektiert wird, wird erreicht, dass bei der Bestimmung des Grauwertes der Anteil der Strahlung, die ausgehend von der dunklen Fläche durch den Schmutz transmittiert, reflektiert und erneut transmittiert wird vernachlässigbar klein ist. Der Grauwert wird daher im Wesentlichen durch die an dem Schmutz gestreuten Strahlungsflüsse des die reflektierende Fläche beleuchtenden Lichts beeinflusst. Somit lässt sich in vorteilhafter Weise von dem Grauwert auf die relative Reflektivität schließen, indem vom direkt detektierten Streulichtanteil auf den Reflexionsgrad geschlossen wird. Bei dem erfindungsgemäßen Verfahren wird insbesondere der an dem Schmutz gestreute Strahlungsfluss ausgewertet, so dass die erfindungsgemäßen Messungen besonders sensitiv auf die Verschmutzung sind.

Da eine Kamera Bilder mit mehreren Millionen Pixeln erzeugen können, können mittels des erfindungsgemäßen Verfahrens theoretisch Informationen von einigen Millionen Verschmutzungsmesspunkten erreicht werden.

Die relative Reflektivität entspricht bei Spiegelflächen dem Verschmutzungsgrad. Bei Substratflächen von Photovoltaikmodulen muss eine entsprechende Korrektur erfolgen, um bei diesen Anlagen verwendeten Verschmutzungsgrad zu bestimmen.

Unter einer bekannten oder vorgegebenen Beleuchtungssituation wird im Rahmen der Erfindung verstanden, dass bei gerichteter Lichtstrahlung Strahlungsfluss und die Strahlungsrichtung bestimmbar und somit bekannt oder vorgegeben werden. Auch kann als Beleuchtungssituation diffuses Licht mit bekanntem oder vorgegebenem Strahlungsfluss erzeugt bzw. verwendet werden.

Durch einen erfindungsgemäßen Kalibrierungsschritt werden aufwendige Berechnungsschritte vermieden. Der Kalibrierungsschritt kann einmalig erfolgen, so dass anschließend die Schritte a) - e) mehrfach durchgeführt werden können. Selbstverständlich ist es auch möglich, dass ein Kalibrierungsschritt vor einer vorgegebenen Anzahl von Wiederholungen der Schritte a) - e) erfolgt und anschließend wiederholt wird. Vorzugsweise ist vorgesehen, dass bei dem Kalibrierungsschritt verschiedene Verschmutzungsgrade der reflektierenden Fläche und/oder einer Kalibrierungsspiegelfläche mit einem Referenzreflektometer (z.B. Handreflektometer) bestimmt und Grauwerte der Messpunkte auf der reflektierenden Fläche für die bei den verschiedene Verschmutzungsgrade ermittelt werden, wobei folgende Schritte durchgeführt werden:
aa) Auswählen oder Bereitstellen einer definierten dunklen Kalibrierungsfläche,
   Positionieren einer Kamera oder Verstellen der reflektierenden Fläche und/oder der Kalibrierungsspiegelfläche derart, dass ein Abbild der dunklen Kalibrierungsfläche aus Sicht der Kamera auf der Spiegelfläche und/oder der Kalibrierungsspiegelfläche erscheint, und
   Beleuchten der reflektierenden Fläche und/oder der Kalibrierungsspiegelfläche mit Licht, wobei eine bekannte oder vorgegebene Kalibrierungsbeleuchtungssituation erzeugt wird,
bb) Aufnahme eines oder mehrerer Kalibrierungsbilder der reflektierenden Fläche und/oder der Kalibrierungsspiegelfläche mit der Kamera
cc) Bestimmen von Bereichen des Kalibrierungsbildes oder der Kalibrierungsbilder, die die Reflektion der dunklen Kalibrierungsfläche in der reflektierenden Fläche und/oder der Kalibrierungsspiegelfläche zeigen
dd) Bestimmen mindestens eines Grauwertes eines Pixel des Kalibrierungsbildes oder eines der Kalibrierungsbilder in dem in Schritt cc) bestimmten Bereichen,
   wobei für die verschiedenen Verschmutzungsgrade jeweils die in Schritt dd) ermittelten Grauwerte gespeichert werden.

Somit sind die bei der Kalibrierung ermittelten Grauwerte konkreten Verschmutzungsgraden zu geordnet. Bei der Durchführung des erfindungsgemäßen Verfahrens kann somit auf einfache Art und Weise aus einem Grauwert auf einen Verschmutzungsgrad geschlossen werden.

Vorzugsweise ist vorgesehen, dass bei dem Kalibrierungsschritt die verschiedenen Verschmutzungsgrade der reflektierenden Fläche und/oder der Kalibrierungsspiegelfläche durch Referenzmessungen, vorzugsweise mittels Reflektometer, ermittelt werden. Auf diese Weise lassen sich die Verschmutzungsgrade in vorteilhafter Weise sehr genau ermitteln.

Vorzugsweise ist vorgesehen, dass bei der Kalibrierung für verschiedene Verschmutzungsgrade in Schritt aa) die Beleuchtungssituation konstant ist oder Abweichungen gemessen werden, wobei die Abweichungen der Beleuchtungssituation über einen Korrekturfaktor berücksichtigt werden.

Dadurch ist sichergestellt, dass bei der Kalibrierung die Grauwerte in vergleichbaren Situationen aufgenommen werden oder entsprechend korrigiert werden und somit die Kalibrierung mit einer hohen Genauigkeit erfolgt.

Der Kalibrierungsschritt kann beispielsweise unter Laborbedingungen durchgeführt werden. Bei der Kalibrierung unter Laborbedingungen wird eine Streufunktion abhängig von Beleuchtungswinkel beim Beleuchten im Schritt aa), Beobachtungswinkel und gerichteten Reflektionsgrad der Kalibrierungsspiegelfläche unter verschiedenen Verschmutzungsgraden bestimmt, wobei eine für den Schritt a) optimale Beleuchtungssituation und optimale Kameraposition ermittelt wird. Bei der Kalibrierung unter Laborbedingungen kann für die Erzeugung verschiedener Verschmutzungsgrade der Kalibrierungsfläche die Art von Staub verwendet werden, der bei dem Einsatzort der Spiegelfläche vorkommt. Alternativ können vorher am Messstandort exponierte Proben verwendet werden, die auf natürliche Weise verschmutzt wurden. Dadurch kann eine Kalibrierung im Labor durchgeführt werden, die mit den realen Bedingungen vergleichbar ist.

Vorzugsweise ist vorgesehen, dass Korrekturfaktoren für von der optimalen Beleuchtungssituation und der optimalen Kameraposition abweichende Beleuchtungssituation und Kamerapositionen in Schritt a) ermittelt werden. Wenn die bei der Durchführung des Verfahrens in Schritt a) erzeugte Beleuchtungssituation oder die bei der Anordnung der Kamera vorgenommene Kameraposition von den bei der Kalibrierung ermittelten optimalen Positionen abweichen, kann somit über die Korrekturfaktoren eine Korrektur erfolgen, wodurch eine sehr genaue Bestimmung des Verschmutzungsgrades in Schritt e) erfolgen kann.

Anstelle einer Kalibrierung im Labor kann die Kalibrierung auch in situ stattfinden. Hierbei kann ein Abschnitt der reflektierenden Fläche verwendet werden, wobei im vorgegebenen zeitlichen Abstand der Verschmutzungsgrad gemessen wird und die Grauwerte ermittelt und zusammen mit der Beleuchtungssituation gespeichert werden.

Alternativ hierzu kann die Kalibrierung in situ anhand eines Abschnitts der reflektierenden Fläche erfolgen, wobei der Abschnitt in Unterabschnitte unterteilt ist und in vorgegebenen zeitlichen Abstand verschiedene Unterabschnitte gereinigt werden, wobei Unterabschnitte ungereinigt verbleiben, um Unterabschnitte mit unterschiedlichen Verschmutzungsgraden zu erhalten, wobei die Verschmutzungsgrade der Unterabschnitte vorzugsweise mittels Reflektometer bestimmt werden und die Grauwerte in Schritt dd) mittels eines oder mehrerer Kalibrierungsbilder des Abschnitts oder der Unterabschnitte erfolgt. Mit anderen Worten: Zu einem Zeitpunkt 0 werden alle Unterabschnitte gereinigt. Danach werden im zeitlichen Abstand von mehreren Tagen immer weniger Unterabschnitte gereinigt, so dass eine Reihe von Unterabschnitten mit verschiedenem Verschmutzungsgrad entsteht, an denen eine Kalibrierung erfolgen kann.

Es besteht auch die Möglichkeit, dass bei einer Kalibrierung in situ eine Kalibrierungsspiegelfläche verwendet wird, die in Unterabschnitte unterteilt ist, wobei die Unterabschnitte unterschiedliche Spiegelgläser mit unterschiedlichem Streuverhalten aufweisen. Dabei werden die Reflektionsgrade der Unterabschnitte bestimmt und Verschmutzungsgraden zugeordnet und die Grauwerte in Schritt dd) mittels eines oder mehrerer Kalibrierungsbilder der Unterabschnitte bestimmt.

Die dunkle Fläche kann möglicher Weise eine nicht konstante Helligkeit aufweisen. Um dies auszugleichen, kann vorgesehen sein, dass in Schritt b) mehrere Bilder aufgenommen werden und vor Schritt c) die mehreren Bilder gemittelt werden, wobei anschließend in den Schritten c) - e) das gemittelte Bild zur Korrektur der Helligkeitsverteilung der dunklen Fläche verwendet wird. Dadurch kann die Inhomogenität korrigiert werden. Eine derartige Mittelung von Bildern kann auch bei der Kalibrierung erfolgen, so dass in Schritt bb) mehrere Bilder aufgenommen werden und vor Schritt cc) die mehreren Bilder gemittelt werden.

Um Inhomogenitäten der dunklen Fläche auszugleichen, kann auch vorgesehen sein, dass die dunkle Fläche direkt abfotografiert wird und aus dem darauf entstehenden Bild Korrekturwerte bestimmt werden.

Vorzugsweise ist vorgesehen, dass die dunkle Fläche und/oder die dunkle Kalibrierungsfläche der Nachthimmel, ein dunkles Target oder ein Absorberrohr sind.

Der Nachthimmel hat sich als besonders vorteilhaft herausgestellt, da dieser einerseits ohne zusätzlichen vorrichtungstechnischen Aufwand vorhanden ist und darüber hinaus nachts Umgebungslicht gering ist, so dass in vorteilhafter Weise eine gewünschte Beleuchtungssituation in Schritt a) erzeugt werden kann.

Die Durchführung des erfindungsgemäßen Verfahrens gemäß Schritten a) - e) und/oder der Kalibrierungsschritt erfolgt somit vorzugsweise nachts.

Ferner ist vorzugsweise vorgesehen, dass die dunkle Fläche und die dunkle Kalibrierungsfläche identisch sind oder Unterschiede zwischen der dunklen Fläche und der dunklen Kalibrierungsfläche bei der Grauwertbestimmung in Schritt d) durch einen oder mehrere Korrekturfaktoren berücksichtigt werden. Dadurch wird sichergestellt, dass die bei der Kalibrierung vorliegende Situation der Situation bei der tatsächlichen Messung entspricht oder zumindest über Korrekturfaktoren angeglichen ist. Dadurch kann der Verschmutzungsgrad besonders genau bestimmt werden.

Es ist ferner vorzugsweise vorgesehen, dass die Beleuchtungssituation und die Kalibrierungsbeleuchtungssituation identisch sind oder in Schritt a) die Beleuchtungssituation bestimmt wird und Unterschiede zwischen der Beleuchtungssituation und der Kalibrierungsbeleuchtungssituation bei der Grauwertbestimmung in Schritt d) über einen oder mehrere Korrekturfaktoren berücksichtigt werden.

Auch auf diese Weise ist der Verschmutzungsgrad mittels des erfindungsgemäßen Verfahrens mit einer sehr hohen Genauigkeit bestimmbar.

Bei dem erfindungsgemäßen Verfahren ist vorzugsweise vorgesehen, dass die Kamera an einem Turm, vorzugsweise einem Solarturm, oder einem Flugobjekt positioniert wird. Die Positionierung der Kamera an einem Turm hat den Vorteil, dass mit einem großen Anteil der reflektierenden Fläche eines Solarkraftwerks mit einem oder mehreren Bildern aufgenommen werden kann. Bei Solarturmkraftwerken kann die Kamera beispielsweise an einem Solarturm angeordnet werden. Die den Solarturm umgebenden Heliostate können dann für die Durchführung des Verfahrens in vorteilhafter Weise derart ausgerichtet werden, dass auf den Bildern das Abbild der dunklen Fläche in gewünschter Weise auf den Bildern erscheint.

Bei der Positionierung der Kamera an einem Flugobjekt kann in vorteilhafter Weise die Kamera gegenüber der reflektierenden Fläche ausgerichtet werden. So können beispielsweise mittels des Flugobjekts die reflektierenden Flächen eines Parabolrinnenkraftwerks abgeflogen werden und kontinuierlich Bilder der reflektierenden Flächen aufgenommen werden, die in dem erfindungsgemäßen Verfahren verwendet werden.

Das erfindungsgemäße Verfahren kann vorsehen, dass die Beleuchtungssituation künstlich erschaffen wird oder durch natürliche Strahlung erfolgt. Die künstliche Beleuchtung hat den Vorteil, dass diese als sehr konstante, d. h. nicht schwankende Beleuchtung geschaffen werden kann, die darüber hinaus sehr genau vorgegeben werden kann bzw. bekannt ist. Die Verwendung von natürlicher Strahlung hat den Vorteil, dass ein zusätzlicher vorrichtungstechnischer Aufwand vermieden wird. Bei der Verwendung von natürlicher Strahlung, wie beispielsweise Solarlicht, vom Mond reflektiertes Licht oder Sternenlicht, empfiehlt sich die Messung der Strahlung an oder in der Nähe der reflektierenden Fläche zur Normierung.

Das erfindungsgemäße Verfahren kann an unterschiedlichen Kraftwerkstypen Anwendung finden, beispielsweise an Solarturmkraftwerken, Parabolrinnenkraftwerken, Linear-Fresnel-Kraftwerke oder Photovoltaikkraftwerken. Die reflektierende Fläche kann somit an unterschiedlichen Spiegeltypen, beispielsweise Heliostaten oder Parabolrinnenreflektoren, angeordnet sein.

Bei der Verwendung des erfindungsgemäßen Verfahrens an Photovoltaikkraftwerken besteht die Besonderheit, dass die Photovoltaikmodule abdeckenden transparenten Substrate eine sehr hohe Transparenz aufweisen und somit nur eine sehr geringe Reflexion erfolgt. Im Rahmen der Erfindung werden diese Substrate dennoch als reflektierende Fläche angesehen. Die Positionierung der Kamera, so dass eine Reflexion der dunklen Fläche auf dem Substrat aufgenommen werden kann schwieriger, jedoch möglich. Der Einfluss des direkt reflektierten Anteils der in der Kamera detektierten Helligkeit ist daher sehr gering und kann besonders bei höheren Verschmutzungsgraden vernachlässigt werden. Einen größeren Einfluss hat die Helligkeitsverteilung der hinter dem Substrat befindlichen absorbierenden Solarzellenoberfläche. Ihre Helligkeitsverteilung kann bei baugleichen Modulen an einem sauberen Modul vermessen werden und als Korrekturfaktor auf alle anderen Module angewendet werden.

Durch das erfindungsgemäße Verfahren wird grundsätzlich erreicht, dass ein direkter Reflex der Lichtquelle in die Kamera vermieden wird.

Bei dem erfindungsgemäßen Verfahren soll die Kamera möglichst so positioniert werden, dass eine maximal große Fläche der reflektierenden Fläche in dem Bild erscheint. Gleichzeitig sollte der Beobachtungswinkel an die Richtung angepasst sein, in die die Verschmutzungsschicht am stärksten streut. Beides kann durch eine entsprechende Kalibrierung in vorteilhafter Weise ermittelt werden.

Als Kamera kann eine visuelle und/oder Infrarot-Kamera eingesetzt werden.

Das erfindungsgemäße Verfahren ermöglicht ferner die Bereitstellung eines automatischen Messsystems, in dem beispielsweise eine stationär angeordnete oder angetriebene bewegliche Kamera voll automatisch Bilder aufnimmt, die dann computerunterstützt ausgewertet werden. Bei der Verwendung einer Kamera an einem Flugobjekt, beispielsweise an einer Drohne, kann im Flugobjekt eine Flugroute vorgegeben werden, die automatisch abgeflogen wird.

Die Kalibrierung kann grundsätzlich für mehrere gemäß dem Verfahren durchgeführte Messungen verwendet werden. Ein Update einer Kalibrierung kann beispielsweise notwendig sein, wenn sich die Beleuchtungssituation ändert oder die Art der Verschmutzung, beispielsweise andere Staubsorten eine Verschmutzung hervorrufen.

Bei der Verwendung des erfindungsgemäßen Verfahrens bei einem Solarturmkraftwerk, bei dem die Kamera an dem Solarturm angeordnet ist, können beispielsweise Kalibrierungsspiegelflächen an wenigen Heliostaten angebracht sein. Eine künstliche Lichtquelle, beispielsweise eine Leuchtkugel an der Turmspitze beleuchtet die Heliostaten. Für Heliostate, die im Bereich einer Isolinie der Beleuchtungsstärke der künstlichen Lichtquelle liegen, wird mittels einer Kalibrierungsspiegelfläche eines Heliostaten in diesem Bereich eine Kalibrierung durchgeführt. Bei der Verschmutzungsgradbestimmung der Heliostate in diesem Bereich werden dann später diese Kalibrierungswerte verwendet.

Bei der Durchführung des erfindungsgemäßen Verfahrens bei einem Parabolrinnenkraftwerk empfiehlt sich die Positionierung der Kamera an einem Flugobjekt. Das Flugobjekt fliegt über die Parabolrinnenkollektoren des Parabolrinnenkraftwerks und nimmt kontinuierlich Bilder auf, wobei die Oberfläche des Absorberrohrs als dunkle Fläche verwendet wird, deren Reflex in den Bildern sichtbar ist. Bei einer Messung tagsüber wird die auf die Spiegelfläche auftreffende direkte und diffuse Sonnenstrahlung (GTI) gemessen oder durch die direkte normale Strahlung (DNI) und die globale auf eine horizontale Fläche auftreffende Sonnenstrahlung (GHI) abgeschätzt. Die aufgenommenen Bilder sollten über die Beleuchtungsstärke entsprechend normiert werden.

Unter "dunklen Fläche" wird im Rahmen der Erfindung eine Fläche verstanden, bei der der von der reflektierenden Fläche gerichtet reflektierte Strahlungsfluss der dunklen Fläche kleiner ist als der Strahlungsfluss, der aufgrund der Beleuchtung vom Schmutz auf der reflektierenden Fläche in die Kamera gestreut wird. Die dunkle Fläche kann auf einfache Art und Weise bestimmt werden, beispielsweise im Rahmen einer Kalibrierung. Dazu wird beispielsweise die Reflektion einer Fläche in einem Spiegel mit einer Kamera aufgenommen, wobei der Spiegel einen gereinigten und einen verschmutzten Abschnitt aufweist.

Die Grauwerte des verschmutzten und des gereinigten Abschnitts in dem Foto werden bestimmt. Die aufgenommene Fläche wird als "dunkel" definiert, wenn das Verhältnis des Grauwertes des gereinigten Abschnitts zu dem Grauwert des verschmutzten Abschnitts kleiner 1 ist. Dunkle Flächen, bei denen dieses Verhältnis kleiner als 0,6 ist, haben sich als besonders vorteilhaft herausgestellt. Die Bestimmung der dunklen Fläche hängt auch von der Beleuchtungssituation und des Verschmutzungsgrades ab, so dass die Beleuchtungssituation bzw. die Kalibrierungsbeleuchtungssituation in Schritt a) bzw. Schritt aa) vorzugsweise entsprechend anzupassen ist. Die Bestimmung der dunklen Fläche kann auch durch die Aufnahme von mehreren Bildern des Spiegels im gereinigten und verschmutzten Zustand erfolgen. Grundsätzlich kann die Auswahl der dunklen Fläche im Rahmen der Verfahrensschritte aa) - dd) erfolgen, wobei beispielsweise diese Schritte zunächst ausgeführt werden, um eine geeignete dunkle Kalibrierungsfläche zu bestimmen.

## Patentansprüche

1. Verfahren zur Bestimmung des Verschmutzungsgrades einer reflektierenden Fläche, vorzugsweise Spiegelfläche, eines Solarkraftwerks mit folgenden Schritten:
a) Auswählen oder Bereitstellen einer definierten dunklen Fläche,
Positionieren der Kamera oder Verstellen der reflektierenden Fläche derart, dass ein Abbild der dunklen Fläche aus Sicht der Kamera auf der reflektierenden Fläche erscheint, und
Beleuchten der reflektierenden Fläche mit Licht, wobei eine bekannte oder vorgegebene Beleuchtungssituation erzeugt wird, und
b) Aufnahme eines oder mehrerer Bilder der Spiegelfläche mit der Kamera
c) Bestimmen von Bereichen des Bildes oder der Bilder, die die Reflektion der dunklen Fläche in der reflektierenden Fläche zeigen
d) Bestimmen mindestens eines Grauwertes eines Pixel des Bildes oder eines der Bilder in dem in Schritt c) bestimmten Bereichen
e) Bestimmen des Verschmutzungsgrads der reflektierenden Fläche aus dem mindestens einen Grauwert,
wobei vor Schritt a) ein Kalibrierungsschritt erfolgt, in dem Grauwerte der Kamera mit Referenzmessungen des Verschmutzungsgrades abgeglichen werden.

2. Verfahren nach Anspruch 1, **dadurch gekennzeichnet, dass** bei dem Kalibrierungsschritt verschiedene Verschmutzungsgrade der reflektierenden Fläche und/oder einer Kalibrierungsspiegelfläche bestimmt und Grauwerte bei den verschiedenen Verschmutzungsgraden ermittelt werden folgende Schritte durchgeführt werden:
aa) Auswählen oder Bereitstellen einer definierten dunklen Kalibrierungsfläche,
Positionieren einer Kamera oder Verstellen der reflektierenden Fläche und/oder der Kalibrierungsspiegelfläche derart, dass ein Abbild der dunklen Kalibrierungsfläche aus Sicht der Kamera auf der Spiegelfläche und/oder der Kalibrierungsspiegelfläche erscheint, und
Beleuchten der reflektierenden Fläche und/oder der Kalibrierungsspiegelfläche mit Licht, wobei eine bekannte oder vorgegebene Kalibrierungsbeleuchtungssituation erzeugt wird,
bb) Aufnahme eines oder mehrerer Kalibrierungsbilder der reflektierenden Fläche und/oder der Kalibrierungsspiegelfläche mit der Kamera
cc) Bestimmen von Bereichen des Kalibrierungsbildes oder der Kalibrierungsbilder, die die Reflektion der dunklen Kalibrierungsfläche in der reflektierenden Fläche und/oder der Kalibrierungsspiegelfläche zeigen
dd) Bestimmen mindestens eines Grauwertes eines Pixel des Kalibrierungsbildes oder eines der Kalibrierungsbilder in dem in Schritt cc) bestimmten Bereichen,
wobei für die verschiedenen Verschmutzungsgrade jeweils die in Schritt dd) ermittelten Grauwerte gespeichert werden.

3. Verfahren nach Anspruch 2, **dadurch gekennzeichnet, dass** die verschiedenen Verschmutzungsgrade der reflektierenden Fläche und/oder der Kalibrierungsspiegelfläche durch Referenzmessungen vorzugsweise mittels Reflektometer ermittelt werden.

4. Verfahren nach einem der Ansprüche 2 oder 3, **dadurch gekennzeichnet, dass** bei der Kalibrierung für verschiedene Verschmutzungsgrade in Schritt aa) die Beleuchtungssituation konstant ist oder Abweichungen gemessen werden, wobei die Abweichungen über einen Korrekturfaktor berücksichtigt werden.

5. Verfahren nach einem der Ansprüche 2 bis 4, **dadurch gekennzeichnet, dass** bei der Kalibrierung unter Laborbedingungen eine Streufunktion abhängig von Beleuchtungswinkel beim Beleuchten in Schritt aa), Beobachtungswinkel und gerichteten Reflektionsgrad der Kalibrierungsspiegelfläche unter verschiedenen Verschmutzungsgraden bestimmt wird, wobei eine für den Schritt a) optimale Beleuchtungssituation und optimale Kameraposition ermittelt wird.

6. Verfahren nach Anspruch 5, **dadurch gekennzeichnet, dass** Korrekturfaktoren für von der optimalen Beleuchtungssituation und der optimalen Kameraposition abweichende Beleuchtungssituationen und Kamerapositionen in Schritt a) ermittelt werden.

7. Verfahren nach einem der Ansprüche 2 bis 4, **dadurch gekennzeichnet, dass**, die Kalibrierung in situ anhand eines Abschnitts der reflektierenden Fläche erfolgt, wobei in vorgegebenem zeitlichen Abstand der Verschmutzungsgrad gemessen und die Grauwerte ermittelt und zusammen mit der Beleuchtungssituation gespeichert werden.

8. Verfahren nach einem der Ansprüche 2 bis 4, **dadurch gekennzeichnet, dass**, die Kalibrierung in situ anhand eines Abschnitts der reflektierenden Fläche erfolgt, wobei der Abschnitt in Unterabschnitte unterteilt ist und in vorgegebenem zeitlichen Abstand verschiedene Unterabschnitte gereinigt werden, wobei Unterabschnitte ungereinigt verbleiben, um Unterabschnitte mit unterschiedlichen Verschmutzungsgraden zu erhalten, wobei die Verschmutzungsgrade der Unterabschnitte vorzugsweise mittels Reflektometer bestimmt werden und die Grauwerte in Schritt dd) mittels eines oder mehrerer Kalibrierungsbilder des Abschnitts oder der Unterabschnitte erfolgt.

9. Verfahren nach einem der Ansprüche 2 bis 4, **dadurch gekennzeichnet, dass**, die Kalibrierung in situ anhand einer Kalibrierungsspiegelfläche erfolgt, wobei die Kalibrierungsspiegelfläche in Unterabschnitte unterteilt ist, wobei die Unterabschnitte unterschiedliche Spiegelgläser mit unterschiedlichen Streuverhalten aufweisen und wobei die Reflektionsgrade der Unterabschnitte bestimmt und Verschmutzungsgraden zugeordnet werden und die Grauwerte in Schritt dd) mittels eines oder mehrerer Kalibrierungsbilder der Unterabschnitte erfolgt.

10. Verfahren nach einem der Ansprüche 1 bis 9, **dadurch gekennzeichnet, dass** in Schritt b) mehrere Bilder aufgenommen werden und vor Schritt c) die mehreren Bilder gemittelt werden, wobei anschließend in den Schritten c) bis e) das gemittelte Bild zur Korrektur der Helligkeitsverteilung der dunklen Fläche verwendet wird.

11. Verfahren nach einem der Ansprüche 1 bis 10, **dadurch gekennzeichnet, dass** die dunkle Fläche und/oder die dunkle Kalibrierungsfläche der Nachthimmel, ein dunkles Target oder ein Absorberrohr sind.

12. Verfahren nach einem der Ansprüche 2 bis 11, **dadurch gekennzeichnet, dass** die dunkle Fläche und die dunkle Kalibrierungsfläche identisch sind oder Unterschiede zwischen der dunklen Fläche und der dunklen Kalibrierungsfläche bei der Grauwertbestimmung in Schritt d) durch einen oder mehrere Korrekturfaktoren berücksichtig werden.

13. Verfahren nach einem der Ansprüche 2 bis 12, **dadurch gekennzeichnet, dass** die Beleuchtungssituation und die Kalibrierungsbeleuchtungssituation identisch sind oder in Schritt a) die Beleuchtungssituation bestimmt wird und Unterschiede zwischen der Beleuchtungssituation und der Kalibrierungsbeleuchtungssituation bei der Grauwertbestimmung in Schritt d) über einen oder mehrere Korrekturfaktoren berücksichtig werden.

14. Verfahren nach einem der Ansprüche 1 bis 13, **dadurch gekennzeichnet, dass** die Kamera an einem Turm oder einem Flugobjekt positioniert wird und/oder dass die Beleuchtungssituation künstlich erschaffen wird oder durch natürliche Strahlung erfolgt.

## Claims

1. A method for determining the degree of soiling of a reflective surface, preferably a mirror surface, of a solar power plant, comprising the following steps:
a) selecting or providing a defined dark surface,
positioning the camera or adjusting the reflective surface so that a reproduction of the dark surface appears on the reflective surface from the camera's point of view, and
illuminating the reflective surface with light, wherein a known or predetermined lighting situation is generated, and
b) recording one or more images of the mirror surface with the camera
c) determining areas of the image or images that show the reflection of the dark surface in the reflective surface
d) determining at least one gray value of a pixel of the image or one of the images in the areas determined in step c)
e) determining the degree of soiling of the reflective surface from the at least one gray value,
wherein a calibration step is carried out before step a), in which the gray values of the camera are compared with reference measurements of the degree of soiling.

2. The method according to claim 1, **characterized in that** in the calibration step different degrees of soiling of the reflecting surface and/or a calibration mirror surface are determined and grey values are determined at the different degrees of soiling, the following steps being performed:
aa) selecting or providing a defined dark calibration surface,
positioning a camera or adjusting the reflective surface and/or the calibration mirror surface in such a way that a reproduction of the dark calibration surface appears on the mirror surface and/or the calibration mirror surface from the camera's point of view, and
illuminating the reflective surface and/or the calibration mirror surface with light, wherein a known or predetermined calibration lighting situation is generated,
bb) recording one or more calibration images of the reflective surface and/or the calibration mirror surface with the camera
cc) determining areas of the calibration image or calibration images that show the reflection of the dark calibration surface in the reflective surface and/or the calibration mirror surface
dd) determining at least one gray value of a pixel of the calibration image or one of the calibration images in the areas determined in step cc),
wherein the gray values determined in step dd) are stored for the various degrees of soiling.

3. The method according to claim 2, **characterized in that** the different degrees of soiling of the reflecting surface and/or the calibration mirror surface are determined by reference measurements, preferably by means of a reflectometer.

4. The method according to one of claims 2 or 3, **characterized in that** during the calibration for different degrees of soiling in step aa) the lighting situation is constant or deviations are measured, the deviations being taken into account by a correction factor.

5. The method according to one of claims 2 to 4, **characterized in that**, during calibration under laboratory conditions, a scattering function is determined as a function of illumination angle during illumination in step aa), observation angle and directional reflectance of the calibration mirror surface under different degrees of soiling, wherein an optimum lighting situation and optimum camera position is determined for step a).

6. The method according to claim 5, **characterized in that** correction factors for lighting situations and camera positions deviating from the optimum lighting situation and the optimum camera position are determined in step a).

7. The method according to one of claims 2 to 4, **characterized in that** the calibration is carried out in situ using a section of the reflective surface, wherein the degree of soiling is measured at predetermined intervals and the grey values are determined and stored together with the lighting situation.

8. The method according to one of claims 2 to 4, **characterized in that** the calibration is carried out in situ using a section of the reflective surface, the section being divided into subsections and different subsections being cleaned at predetermined intervals, wherein subsections remain uncleaned in order to obtain subsections with different degrees of soiling, the degrees of soiling of the subsections preferably being determined by means of reflectometers and the grey values being determined in step dd) by means of one or more calibration images of the section or of the subsections.

9. The method according to one of claims 2 to 4, **characterized in that** the calibration is carried out in situ using a calibration mirror surface, the calibration mirror surface being subdivided into subsections, the subsections having different mirror glasses with different scattering characteristics and the reflectances of the subsections being determined and assigned to degrees of soiling and the grey values being determined in step dd) by means of one or more calibration images of the subsections.

10. The method according to one of claims 1 to 9, **characterized in that** in step b) a plurality of images are recorded and before step c) the plurality of images are averaged, the averaged image then being used in steps c) to e) to correct the brightness distribution of the dark surface.

11. The method according to any one of claims 1 to 10, **characterized in that** the dark surface and/or the dark calibration surface is the night sky, a dark target or an absorber tube.

12. The method according to one of claims 2 to 11, **characterized in that** the dark surface and the dark calibration surface are identical or differences between the dark surface and the dark calibration surface are taken into account by one or more correction factors when determining the grey scale value in step d).

13. The method according to one of claims 2 to 12, **characterized in that** the lighting situation and the calibration lighting situation are identical or the lighting situation is determined in step a) and differences between the lighting situation and the calibration lighting situation are taken into account when determining the grey scale value in step d) by means of one or more correction factors.

14. The method according to one of claims 1 to 13, **characterized in that** the camera is positioned on a tower or a flying object and/or that the lighting situation is created artificially or by natural radiation.

## Revendications

1. Procédé pour la détermination du degré d'encrassement d'une surface réfléchissante, de préférence d'une surface de miroir, d'une centrale solaire, comportant les étapes suivantes :
a) sélection ou fourniture d'une surface sombre définie,
positionnement de la caméra ou réglage de la surface réfléchissante de telle sorte qu'une représentation de la surface sombre apparait sur la surface réfléchissante vue par la caméra, et
éclairage de la surface réfléchissante avec de la lumière, dans lequel une situation d'éclairage connue ou prédéfinie est générée, et
b) prise d'une ou de plusieurs images de la surface de miroir avec la caméra
c) détermination de zones de l'image ou des images qui montrent la réflexion de la surface sombre dans la surface réfléchissante
d) détermination d'au moins un niveau de gris d'un pixel de l'image ou de l'une des images dans les zones déterminées à l'étape c)
e) détermination du degré d'encrassement de la surface réfléchissante à partir de l'au moins un niveau de gris,
dans lequel, avant l'étape a), une étape d'étalonnage est effectuée, lors de laquelle des niveaux de gris de la caméra sont comparés avec des mesures de référence du degré d'encrassement.

2. Procédé selon la revendication 1, **caractérisé en ce que**, lors de l'étape d'étalonnage, différents degrés d'encrassement de la surface réfléchissante et/ou d'une surface de miroir d'étalonnage sont déterminés et des niveaux de gris sont spécifiés pour les différents degrés d'encrassement, les étapes suivantes sont exécutées :
aa) sélection ou fourniture d'une surface d'étalonnage sombre définie,
positionnement d'une caméra ou réglage de la surface réfléchissante et/ou de la surface de miroir d'étalonnage de telle sorte qu'une représentation de la surface d'étalonnage sombre apparait sur la surface de miroir et/ou la surface de miroir d'étalonnage vues par la caméra, et
éclairage de la surface réfléchissante et/ou de la surface de miroir d'étalonnage avec de la lumière, dans lequel une situation d'éclairage d'étalonnage connue ou prédéfinie est générée,
bb) prise d'une ou de plusieurs images d'étalonnage de la surface réfléchissante et/ou de la surface de miroir d'étalonnage avec la caméra
cc) détermination de zones de l'image d'étalonnage ou des images d'étalonnage qui montrent la réflexion de la surface d'étalonnage sombre dans la surface réfléchissante et/ou la surface de miroir d'étalonnage
dd) détermination d'au moins un niveau de gris d'un pixel de l'image d'étalonnage ou de l'une des images d'étalonnage dans les zones déterminées à l'étape cc),
dans lequel les niveaux de gris spécifiés à l'étape dd) sont respectivement enregistrés pour les différents degrés d'encrassement.

3. Procédé selon la revendication 2, **caractérisé en ce que** les différents degrés d'encrassement de la surface réfléchissante et/ou de la surface de miroir d'étalonnage sont spécifiées par des mesures de référence, de préférence au moyen de réflectomètres.

4. Procédé selon l'une des revendications 2 ou 3, **caractérisé en ce que**, lors de l'étalonnage pour différents degrés d'encrassement à l'étape aa), la situation d'éclairage est constante ou des écarts sont mesurés, dans lequel les écarts sont pris en compte par l'intermédiaire d'un facteur de correction.

5. Procédé selon l'une des revendications 2 à 4, **caractérisé en ce que**, lors de l'étalonnage dans des conditions de laboratoire, une fonction de diffusion est déterminée en fonction de l'angle d'éclairage lors de l'éclairage à l'étape aa), de l'angle d'observation et du degré de réflexion dirigé de la surface de miroir d'étalonnage selon différents degrés d'encrassement, dans lequel une situation d'éclairage optimale et une position de caméra optimale pour l'étape a) sont spécifiées.

6. Procédé selon la revendication 5, **caractérisé en ce que** des facteurs de correction pour des situations d'éclairage et des positions de caméra s'écartant de la situation d'éclairage optimale et de la position de caméra optimale sont spécifiées à l'étape a).

7. Procédé selon l'une des revendications 2 à 4, **caractérisé en ce que** l'étalonnage est effectué *in situ à* l'aide d'une section de la surface réfléchissante, dans lequel le degré d'encrassement est mesuré à un intervalle de temps prédéfini et les niveaux de gris sont spécifiés et enregistrés conjointement avec la situation d'éclairage.

8. Procédé selon l'une des revendications 2 à 4, **caractérisé en ce que** l'étalonnage est effectué *in situ à* l'aide d'une section de la surface réfléchissante, dans lequel la section est divisée en sous-sections et différentes sous-sections sont nettoyées à un intervalle de temps prédéfini, dans lequel des sous-sections restent non nettoyées afin d'obtenir des sous-sections comportant différents degrés d'encrassement, dans lequel les degrés d'encrassement des sous-sections sont de préférence déterminés au moyen de réflectomètres et les niveaux de gris à l'étape dd) au moyen d'une ou de plusieurs images d'étalonnage de la section ou des sous-sections.

9. Procédé selon l'une des revendications 2 à 4, **caractérisé en ce que** l'étalonnage est effectué *in situ à* l'aide d'une surface de miroir d'étalonnage, dans lequel la surface de miroir d'étalonnage est divisée en sous-sections, dans lequel les sous-sections présentent des verres de miroir différents comportant des comportements de diffusion différents et dans lequel les degrés de réflexion des sous-sections sont déterminés et associés à des degrés d'encrassement et les niveaux de gris à l'étape dd) au moyen d'une ou de plusieurs images d'étalonnage des sous-sections.

10. Procédé selon l'une des revendications 1 à 9, **caractérisé en ce que**, à l'étape b), plusieurs images sont prises et, avant l'étape c), la moyenne des images est calculée, dans lequel l'image moyenne est ensuite utilisée dans les étapes c) à e) pour corriger la répartition de la luminosité de la surface sombre.

11. Procédé selon l'une des revendications 1 à 10, **caractérisé en ce que** la surface sombre et/ou la surface d'étalonnage sombre sont le ciel nocturne, une cible sombre ou un tube absorbant.

12. Procédé selon l'une des revendications 2 à 11, **caractérisé en ce que** la surface sombre et la surface d'étalonnage sombre sont identiques ou des différences entre la surface sombre et la surface d'étalonnage sombre sont prises en compte lors de la détermination du niveau de gris à l'étape d) par un ou plusieurs facteurs de correction.

13. Procédé selon l'une des revendications 2 à 12, **caractérisé en ce que** la situation d'éclairage et la situation d'éclairage d'étalonnage sont identiques ou la situation d'éclairage est déterminée à l'étape a) et des différences entre la situation d'éclairage et la situation d'éclairage d'étalonnage sont prises en compte lors de la détermination du niveau de gris à l'étape d) par l'intermédiaire d'un ou de plusieurs facteurs de correction.

14. Procédé selon l'une des revendications 1 à 13, **caractérisé en ce que** la caméra est positionnée sur une tour ou un objet volant et/ou **en ce que** la situation d'éclairage est créée artificiellement ou se fait par rayonnement naturel.
